# EUROPEAN PATENT SPECIFICATION

(11) **EP 0 784 926 B1**
(45) Date of publication and mention of the grant of the patent: **22.03.2000**
(21) Application number: 97200084.8
(22) Date of filing: 17.01.1997
(51) Int. Cl.: A01K 1/06

(54) **Feed barrier**
Fressgitter
Cornadis

(30) Priority: 18.01.1996 NL 1002120
(43) Date of publication of application: 23.07.1997
(73) Proprietor: REDNIPS HOLDING B.V., 9281 LE Harkema (NL)
(72) Inventor: Timmermans, Hubertus Renier Maria, 9713 AE Groningen (NL)
(74) Representative: Ferguson, Alexander

(56) References cited:
- BE-A- 899 384
- US-A- 4 867 105

## Description

The invention relates to a feed barrier for livestock, in particular cattle as described in the preamble of claim 1. A suchlike feed barrier is known from US-A-4.867.105 and provides a plurality of adjacent fodder openings for livestock and comprises an upper beam and a lower beam, which extend substantially horizontally and which are mutually connected by means of a plurality of posts which usually extend substantially vertically.

The invention relates in particular to self-locking feed barriers, where a fodder opening can be brought into a position in which livestock can move their heads through the fodder opening towards the fodder side, and a catch position in which livestock cannot withdraw their heads from the fodder side. During movement of the head towards the fodder the animal ensures the transition of the fodder opening from the access position to the catch position.

These kinds of self-closing feed barriers are known from the European patent application 0.322.023, the European patent application 0.437.298 and the Dutch patent applications 84.00199, 85.03066 and 80.00505, among others.

In these known feed barriers the fodder openings are bounded on the one hand by one of the posts, which extend vertically between both beams, and bounded on the other hand by a usually straight, tiltable tube, which, at a location slightly below the centre, is hingeably attached to a buckled tube which also extends between both beams. Above the hinge point the buckled tube follows a course that diverges from the fodder opening concerned. In the access position of the fodder opening the tilting tube will be able to rest against the said upper portion of the bent tube with its portion disposed above the hinge point.

The heads of the livestock are thus presented with a V-shaped access opening, which corresponds to some degree to the contours of the heads of livestock, particularly in the case of cattle. By moving the head downwards the portion of the tilting tube located below the hinge will be forced to the side and consequently the upper portion of the tilting tube will move towards the fodder opening. In the upper beam, or alternatively in the lower beam, operable locking means are provided that secure the tilting tube, when the latter has reached a substantially vertical position - the catch position -, in that position. For that purpose an operating rod, for instance, has been included the beam concerned.

In older types of feed barriers the buckled tube below the hinge has a substantially vertical course. The lower portion of the tilting tube then vertically abuts the lower portion of the buckled tube. In later types, in particular the so-called safety feed barriers for heavy livestock, such as the feed barrier disclosed in US-A-4.867.105, buckled tubes have been included, which follow a course that diverges from the fodder opening concerned in the portion disposed below the hinge points too. Thus, below the hinge point, too, a head passage is provided through which, in emergencies, when the upper head passage can no longer be reached, the animals can still release themselves from the feed barrier.

The operating means included in one of the two beams, particularly an operating rod and locking latches, can also be adapted for moving the tilting tube into and out of the safety position.

Although the safety and the comfort for livestock has increased considerably due to various improvements to the feed barriers made in the course of time, a number of points still need improving. First of all it can be noted that the access opening is indeed V-shaped, corresponding in general to the contours of the heads of livestock, but this V-shape is tilted. When moving the head back or forth through the access opening the livestock will therefore have to turn their heads. The widest side of the head will then however no longer be horizontal, so that no use can be made of the largest width of the access opening and as a result the fodder opening will have to be of a somewhat larger dimension.

In addition, in the case of a safety feed barrier the freedom of movement below for the heads of livestock also needs improving. This is particularly the case if the livestock are in a lying position. A cow, for instance, will only be able to stand up from a lying position by first stretching the hind legs and only after that the front legs. In doing so the animal makes a tilting movement to the fore. The feed barrier prevents this, however. It is therefore important that the animal can withdraw its head through the opening when it is in a lying position. The reverse V-shaped opening which can be realized in the safety feed barriers for heavy livestock offers the cattle some opportunity of turning their heads, but for that purpose the feed barrier has to be designed to be quite high so as to permit the realization of the desired width below.

It is an object of the invention to provide an improvement on one or both points and other points and provides for this purpose a feed barrier as described in claim 1.

On account of the measure according to the invention the width of the fodder opening in an area near the beam is additionally enlarged, without the effectiveness of the feed barrier in the catch position being reduced.

It is remarked that BE-A-899.384 discloses a feed barrier having a plurality of fodder openings which are each bounded by a tiltable tube, hingeably attached to a fixedly arranged, buckled tube, on the one side, and a straight tube, which is pivotably connected to the upper beam and can be swung from an inclined orientation -in which livestock can move their heads through the fodder openings-towards a less inclined or vertical orientation -the catch position-. The tiltable tube has a buckled upper portion which in the entrance position is oriented vertically and in the catch position is oriented inwardly inclined, as well as a buckled lower portion which in the entrance position is oriented vertically and in the catch position is oriented outwardly inclined and carries a latch at its lower end.

Preferably the boundary posts each comprise a substantially vertical portion, which is disposed above the portion connecting thereto and extending obliquely to the side and upward to the upper beam.

As an addition or as an alternative thereto the tilting tubes can be further swingable from the catch position to a swung-through safety position, in which the tilting tube and the boundary post define a substantially reversed V-shaped opening below the hinge axes, the boundary post comprising a substantially vertical portion, which is disposed below the horizontal plane defined by the hinge axes, said end portion connecting thereto and extending obliquely to the side and downward to the lower beam.

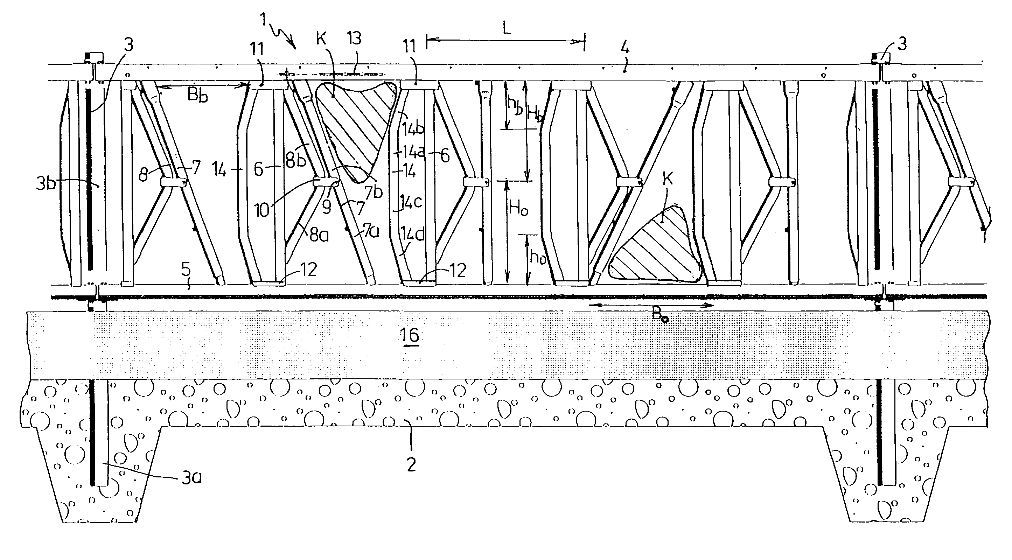

The invention will now be explained on the basis of the exemplary embodiment shown in the accompanying drawing.

In the only figure an exemplary embodiment of the feed barrier 1 according to the invention is shown. The feed barrier 1 comprises in principle a lower beam 5 and an upper beam 4, in which an operating rod, which is slidable therein, and locking and stop latches 13 operated therewith, are accomodated. The upper beam 4 and lower beam 5 are attached to upper portions 3b of standpipes 3, which are clamped with a lower portion 3a in the concrete stable floor 2. In addition, a longitudinal partition 16 with which the fodder is held back in the direction of the sitting/lying box of the livestock is placed on the stable floor 2 and against the standpipes 3. Instead of a longitudinal partition a concrete retaining wall can be provided.

In the feed barrier 1 a plurality of fodder openings have been realized, in each case one per unit of length L, which is usually 30 to 80 cm, depending on the type of livestock. A number of functions that are related to the fodder opening concerned should be accommodated within the length L in the feed barrier. One of those functions is stability, for which purpose the tubes 6 are provided. The tubes 6 extend between the upper beam 4 and the lower beam 5 and are attached with their ends thereto in a static manner thereto by means of securing plates 11 and 12, respectively, by welding or clamping. The functions of providing an access opening for the head K of the animal, a catch position for that and a safety position for that are furnished with the help of the tubes 7, 8 and 14. The tube 7 is attached to buckled tube 8 with the help of hinge 9 and bracket 10, which tube 8 extends with portion 8a sidewards from the hinge area to the side and to below to the nearest vertical tube 6 and is attached to that, for example by means of welding. The buckled tube 8 extends with portion 8b above the hinge area upwards and sidewards to attaching plates 11, and is attached there, too, for example by means of welding.

The tilting tube 7 has a portion 7b above the hinge point 9 and a portion 7a below the hinge point 9, the portion 7b being longer or at least heavier than the portion 7a, so that the position shown in the opening furthest to the left in the drawing is an automatic resting position of the tilting tube 7.

The tilting tube 7 bounds the fodder opening to one side, and the tube 14 to the other side. In accordance with the invention the tube 14 is not made so that it has an almost entirely vertical course from top to bottom, as is usual, but instead a lower portion 14a, an upper portion 14b and a middle portion 14c can be distinguished in the tube 14. Just as - in that location - the tubes which are usual up until now, the middle portion 14c extends substantially vertically at the usual distance with regard to the hinge point 9, but the lower portion 14a and the upper portion 14b flare outwardly. This flaring can take place in a straight fashion, the transition between the middle portion 14c and the other portions 14a and 14b being buckled, but can also have a curved course, as long as an additional enlargement of the width of the fodder opening is brought about there, as an addition to the enlargement as a result of the orientation of the tilting tube 7. In that way a maximum width B_{b} in the access opening and a maximum width Bₒ in the so-called safety opening can be attained.

The height of the feed barrier, that is the distance'between the upper side of the upper beam and the lower side of the lower beam can nevertheless be kept restricted. A usual safety feed barrier for heavy livestock will have to have a height of 1.13 m, for instance, whereas for comparable applications in the feed barrier according to the invention 97 cm will suffice, for instance. Despite the relatively small height of the feed barrier the upper beam and the hinge point are located such that the cattle can move its head back and later on forth through the access opening in an animal friendly manner without having to lift up its head.

In the example shown the buckle between the middle portion 14c and the end portions 14a and 14b is at a distance of L_{b} and Lₒ of 1/4 to 2/3 H_{b}, Hₒ, respectively.

With its head K in an almost straight orientation the animal can move through the access opening, as is shown in the second leftmost fodder opening. It be noted that the attaching plates 11 with the upper end of the tube portion 14b are also set back sidewards. Hence additional space is moreover provided for operating means in the upper beam 4 for operating or securing the tilting tube in the safety position.

In the fodder opening located more to the right the head K of the animal is shown during turning thereof so as to be able to leave the feeding position at the lower side, which is necessary if the cow lies down during feeding in the feed barrier, for instance. The safety opening is enlarged without the total height having to be enlarged; this is a result of the invention. A lesser height of the feed barrier is desirable to ensure that the said wooden partition or said concrete wall can have as great a height as possible to prevent fodder landing on the grids as a result of mechanical feeding or because it is pulled onto the grid by the cows. Enlarging the feedway, which happens frequently in Germany, among other countries, is thus made possible. There is a restriction the height of the wall or the partition can have.

## Claims

1. Feed barrier (1) with a plurality of adjacent fodder openings for livestock, comprising two beams which determine an upper beam (4) and a lower beam (5), and which extend substantially horizontally and which are mutually connected by means of a plurality of regularly horizontally spaced connecting posts (6), each fodder opening being bound to one side by a tilting tube (7) and bound to the other side by a static boundary post (14), the tilting tubes being tiltable about a horizontal hinge axis (9) extending transverse to the feed barrier between at least one inclined access position, in which they define with a boundary post above the hinge axis a V-shaped access opening for the livestock's head, and a catch position, in which they extend substantially vertically so as to allow engaging behind the livestock's head, characterized in that the boundary post (14) has in an area adjacent at least one of the beams (4, 5) an end portion, (14b, 14d) which follows a course diverging from the fodder opening concerned towards the beam concerned.

2. Feed barrier according to claim 1, the boundary posts (14) each comprising a substantially vertical portion, (114a) which is disposed above the horizontal plane defined by the hinge axes (9), said end portion (14b, 14d) connecting thereto and extending obliquely to the side and upward to the upper beam (4).

3. Feed barrier according to claim 1 or 2, the tilting tubes (7) being further swingable from the catch position to a swung-through safety position, in which the tilting tube and the boundary post (14) define a substantially reversed V-shaped opening below the hinge axes (9), the boundary post comprising a substantially vertical portion (14c) which is disposed below the horizontal plane defined by the hinge axes, said end portion connecting thereto and extending obliquely to the side and downward to the lower beam (5).

4. Feed barrier according to claim 1, 2 or 3, the said end portion (14b, 14d) of the said boundary posts (14) extending over 1/4 to 2/3 of the vertical distance from the beam (4, 5) concerned to the horizontal plane in which the hinge axes (9) are disposed.

## Patentansprüche

1. Freßgitter (1) mit einer Anzahl nebeneinandergelegene Futteröffnungen für Vieh, umfassend zwei Balken, die einen Oberbalken (4) und einen Unterbalken (5) bestimmen, und sich hauptsächlich horizontal erstrecken und mittels einer Anzahl auf regelmäßigem horizontalem Abstand von einander gesetzte Verbindungspfosten (6) mit einander verbunden sind, wobei jede Futteröffnung zu einer Seite von einem Kipprohr (7) begrenzt wird und zu der anderen Seite von einem ortsfesten Begrenzungspfosten (14) begrenzt wird, wobei die Kippröhre um eine horizontale, quer auf dem Freßgitter befindliche Drehachse (9) zwischen zumindest einem schrägen Zugangsstand, worin sie mit einem Begrenzungspfosten über der Drehachse eine V-förmige Zugangsöffnung für den Viehkopf bestimmen, und einem Fangstand, worin sie sich hauptsächlich vertikal erstrecken um hinter den Viehkopf greifen zu können kippbar sind, **dadurch gekennzeichnet**, daß der Begrenzungspfosten (4) in einem Gebiet an zumindest einem der Pfosten (4, 5) grenzend einen Endabschnitt (14b, 14d) hat, der zu dem betreffenden Balken einen sich von der betreffenden Futteröffnung divergierenden Verlauf folgt.

2. Freßgitter gemäß Anspruch 1, wobei die Begrenzungspfosten (14) jeder einen hauptsächlich vertikalen Abschnitt (114a) umfassen der über der horizontalen Fläche, von den Drehachsen (9) bestimmt, gelegen ist, wobei der Endabschnitt (14b, 14d) darauf anschließt und sich schräg seitwärts und nach oben zum Oberbalken (4) erstreckt.

3. Freßgitter gemäß Anspruch 1 oder 2, wobei die Kippröhre (7) von dem Fangstand zu einem durchgeschwenkten Sicherungsstand weiter schwenkbar sind, worin das Kipprohr und der Begrenzungspfosten (14) unter den Drehachsen (9) eine hauptsächlich umgekehrte V-förmige Öffnung bestimmen, wobei der Begrenzungspfosten einen hauptsächlich vertikalen Abschnitt (14c) umfaßt, der unter der horizontalen Fläche, von den Drehachsen bestimmt, gelegen ist, wobei der Endabschnitt darauf anschließt und sich schräg seitwärts und nach unten zum Unterbalken (5) erstreckt.

4. Freßgitter gemäß Anspruch 1, 2 oder 3, wobei der genannte Endabschnitt (14b, 14d) der genannten Begrenzungspfosten (14) sich über 1/4 bis 2/3 des vertikalen Abstandes von dem beteffenden Pfosten (4, 5) bis die horizontale Fläche worin die Drehachsen (9) gelegen sind, erstreckt.

## Revendications

1. Cornadis (1) comportant une pluralité d'ouvertures à fourrage pour bétail, comprenant deux poutres qui sont une poutre supérieure (4) et une poutre inférieure (5), lesquelles s'étendent substantiellement horizontalement et sont reliées ensemble au moyen d'une pluralité de montants (6) de liaison régulièrement espacés en direction horizontale, chaque ouverture à fourrage étant limitée d'un côté par un tube pivotant (7), et limitée de l'autre côté par un montant (14) de limitation fixe, les tubes pivotants étant pivotants autour d'un axe horizontal (9) d'articulation s'étendant transversalement au cornadis entre au moins une position d'accès inclinée dans laquelle ils définissent avec un montant de limitation, au-dessus de l'axe d'articulation, une ouverture d'accès en forme de V pour la tête du bétail, et une position de capture dans laquelle ils s'étendent substantiellement verticalement afin de permettre une prise derrière la tête du bétail, caractérisé en ce que le montant (14) de limitation a, dans une région voisine d'au moins une des poutres (4, 5), une partie d'extrémité (14b, 14d) qui suit un trajet qui diverge de l'ouverture à fourrage concernée en direction de la poutre concernée.

2. Cornadis selon la revendication 1, les montants de limitation (14) comprenant chacun une partie substantiellement verticale (14a) qui est disposée au-dessus du plan horizontal défini par les axes d'articulation (9), ladite partie d'extrémité étant reliée avec celle-ci (14b, 14d) et s'étendant obliquement vers le côté et vers le haut en direction de la poutre supérieure (4).

3. Cornadis selon la revendication 1 ou 2, les tubes pivotants (7) étant en outre pivotants depuis la position de capture vers une position de sécurité par un mouvement de basculement, dans lequel le tube pivotant (7) et le montant de limitation (14) définissent une ouverture en forme substantiellement de V renversé au dessous des axes d'articulation (9), le montant de limitation comprenant une partie substantiellement verticale (14c) qui est disposée au dessous du plan horizontal défini par les axes d'articulation, ladite partie d'extrémité étant reliée avec celle-ci et s'étendant obliquement vers le côté et vers le bas en direction de la poutre inférieure (5).

4. Cornadis selon la revendication 1, 2 ou 3, ladite partie d'extrémité (14b, 14d) desdits montants de limitation (14) s'étendant sur 1/4 à 2/3 de la distance verticale de la poutre (4, 5) concernée au plan horizontal dans lequel les axes d'articulation (9) sont disposés.
